# EUROPEAN PATENT APPLICATION

(11) **EP 3 955 030 A1**
(43) Date of publication of application: **16.02.2022**
(21) Application number: 20000278.0
(22) Date of filing: 10.08.2020
(51) Int. Cl.: G01S 19/35, G01S 19/47, G01S 19/45, G01S 19/53, G01S 19/14

(54) **APPARATUS FOR PRECISE POSITIONING, MAPPING OR OBJECT DETECTION**

(71) Applicant: ANavS GmbH, 80686 München (DE)
(72) Inventor: HENKEL, Patrick, 82275 Emmering (DE); SPERL, Andreas, 93485 Rimbach (DE); HEINRICH, Michael, 82024 Taufkirchen (DE)

(57) **Abstract**

An apparatus with a set of integrated positioning sensors and an integrated processor for performing the sensor fusion, whereas
- the set of integrated positioning sensors includes at least two, more preferable three, receivers (5) and antennas (4) for the reception of global navigation satellite system signals (3), an inertial sensor (9), an interface for receiving wheel speed measurements (10), a camera (14) and a LiDAR or radar (13),
- the integrated processor (11) combines the sensor data for determining the position, velocity or orientation of the apparatus, for determining a map, or for determining the environment of the apparatus.

## Description

The present invention concerns an apparatus for precise positioning, mapping or object detection. The apparatus might be installed on a car or robot and could be used as reference system for positioning, to generate top-actual and highly accurate maps, or to support autonomous driving.

It is well known that autonomous cars need several sensors for environment detection. Waymo is currently building its fifth generation self-driving system, which includes 5 separated multi-sensor systems [1]: The first system includes a 360 degree LiDAR and a 360 degree vision system with a long-range camera and LiDAR being installed on the top of the car. The second system consists of a perimeter LiDAR, a peripheral vision system and a radar, and is installed at the engine hood. The third system is a perimeter LiDAR and perimeter vision system being integrated above the bumper. The remaining two systems include a perimeter LiDAR + perimeter vision system and a perimeter vision system + radar, and are both integrated into the rear side of the car.
Autonomous cars with vision sensors including cameras, radar and LiDAR need an unobstructed view of the environment. Winter salt spray, bird droppings or splattered insects could lead to severe sensor failures. The article [2] of S. Abuelsamid describes a bug-washing system of Ford to keep the functionality of vision sensors.
In [3], a mobile mapping system is described with a deeply-coupled software receiver that combines the measurements of a Global Navigation Satellite System (GNSS) receiver, of an Inertial Navigation System (INS), and of a Light Detection and Ranging (LiDAR) sensor.

The present invention differs from [1] and [2] by integrating all sensors into a single platform. The invention differs from [1], [2] and [3] by the integration of at least two instead of only one receiver/ antenna of GNSS signals. The use of two or more preferably of three GNSS receivers enables an accurate GNSS-based attitude (heading, roll and pitch) determination, which cannot be performed with only one GNSS receiver/ antenna. Moreover, the deep-coupling of [3] cannot be applied to mass-market low-cost GNSS receivers as they provide only carrier phase, pseudorange, Doppler and signal strength information but do not provide any access to the tracking loops.

Considering the state of the art, it is an objective of the present invention to improve the accuracy and reliability of the positioning, mapping and object detection by integrating a large variety of sensors into a single platform, and to make the system installation much easier by integrating all sensors and processors into a single platform such that the user does not need to install, wire or calibrate individual sensors, and also does no longer need to measure any lever arms between all sensors and a certain reference point.

The problem is solved by the apparatus of claim 1. Preferred embodiments are incorporated in the dependent claims, the description and the figures.

According to the present invention, an apparatus with a set of integrated positioning sensors and an integrated processor for performing the sensor fusion is provided,
characterized in that
- the set of integrated positioning sensors includes at least two, more preferable three, receivers and antennas for the reception of global navigation satellite system signals, an inertial sensor, an interface for receiving wheel speed measurements, a camera and a LiDAR or radar,
- the integrated processor combines the sensor data for determining the position, velocity or orientation of the apparatus, for determining a map, or for determining the environment of the apparatus.

A further advantageous embodiment is described in the second claim: The antennas for the reception of the global navigation satellite system signals and the LiDAR sensor are integrated into the apparatus such that the antennas are separated by at least 10 cm, more preferably by at least 20 cm, of each other and such that the LiDAR sensor is placed at the top position within the apparatus. The minimum separation of the antennas is in the order of half of the wavelength of the L1 band being used for global navigation satellite systems. The minimum separation enables an accurate attitude determination based on global navigation satellite system signals. Moreover, the minimum separation ensures that the signal reception of one antenna does not affect the signal reception at any other antenna. The LiDAR sensor is placed at the top position as it performs a horizontal 360 degree scan of the environment that shall not be affected by any other sensor.

A further advantageous embodiment is described in the third claim: The apparatus shall include a mobile radio module for the reception of global navigation satellite system correction data, or for the reception of a map or, for the transmission of the sensor data, or for the transmission of the determined position or environment. The global navigation satellite system correction data might include corrections for an atmospheric delay, a satellite position, clock offset, phase or code bias, or a range correction to improve the accuracy of positioning based on global navigation satellite system signals. The reception of a map enables a visual positioning and, thereby, an accurate positioning also in areas without or very limited the reception of global navigation satellite system signals. The visual positioning provides a position solution that is independent from Global Navigation Satellite System (GNSS) signals and, thereby, can be used to check the consistency of the positioning solution.

A further advantageous embodiment is described in the fourth claim: The apparatus shall include a processor for performing a camera-based, LiDAR-based or radar-based simultaneous localization and mapping, or a visual odometry that provides position, velocity, attitude or angular rate information. The processor shall include a graphics processing unit (GPU) to enable a real-time processing of the camera-, LiDAR- or radar data.

A further advantageous embodiment is described in the fifth claim: The apparatus includes a processor for fusion of the measurements of the GNSS, of the inertial sensor, of the wheel speed measurements, and optionally also of the position, velocity, attitude or angular rate information obtained from the camera-based, LiDAR-based or radar-based simultaneous localization and mapping or visual odometry. The sensor fusion is typically performed with a Kalman filter, which estimates the position, velocity, acceleration, attitude (e.g. as quaternion or as Euler angles), angular rates and the biases of the inertial measurements from the raw measurements. The Kalman filter includes a state prediction and a state update. The state prediction is typically performed with the inertial measurements or a movement model. The inertial sensor provides acceleration and angular rates measurements in the body-fixed frame. The state update is performed with the measurements of the GNSS. These measurements include pseudoranges, carrier phases and Doppler measurements on at least one frequency. The GNSS/ INS sensor fusion represents a tight coupling.

A further advantageous embodiment is described in the sixth claim: The apparatus performs an object or environment detection with a conventional feature-based approach or a machine learning based approach or a deep learning based approach, that use the camera, LiDAR or radar data. The conventional feature-based approach might detect abstract features (e.g. corners or edges) or higher-level features (e.g. road markings). The advantage of the conventional feature-based approach is that a physical description of the features is taken into account and that it does not need an extensive training. The disadvantage of the conventional feature-based approach is that there is a large plurality of features and that it is very difficult to find accurate models to describe the large plurality of features.
The machine learning and deep learning based approaches use multi-layer neuronal networks. The outputs of one layer of the neuronal network serve as inputs for the next layer of the neuronal network. An output vector is generated from the input vector in three steps: First, the product of a weighting matrix and of the input vector is determined. Second, a bias vector is added. Third, an activation function is applied. The weighting matrix and the bias vector is different for each layer and need to be determined in the training phase, e.g. through minimization of the mean-square error. This could be done iteratively by adjusting the weights and biases with the steepest gradient method.
The deep learning based approach is an end-to-end approach, i.e. it determines the objects directly from the raw camera, LiDAR or radar data without making an explicit feature detection. Thereby, it differs from the machine-learning based approach, which uses some already extracted features as inputs.

The advantages of the machine learning and in particular of the deep learning is that there is no need to find accurate models to describe the large plurality of features. The disadvantage of these approaches is the need for a very large amount of data to train the neuronal networks, i.e. to find the weights and biases of each layer.

A further advantageous embodiment is described in the seventh claim: The apparatus provides raw sensor data or a determined position, velocity, acceleration, attitude or angular rate information, or a list of objects with their positions, or a map based on camera, LiDAR or radar data. The list of objects is determined with a conventional feature-based approach or a machine learning based approach or a deep learning based approach as described in the previous embodiment. The map is determined by geo-referencing of the camera, LiDAR or radar data with the position solution obtained from the sensor fusion of the measurements of the Global Navigation Satellite Systems (GNSS), of the inertial sensor, of the wheel speed measurements, and optionally also of the position, velocity, attitude or angular rate information obtained from the camera-based, LiDAR-based or radar-based simultaneous localization and mapping or visual odometry. Overlapping camera, LiDAR or radar data could be used for loop closure detection. Eventual differences in illumination are reduced by some blending.

A further advantageous embodiment is described in the eighth claim: The apparatus includes a functional safety layer for monitoring the functional safety of the apparatus or of the platform that carries the apparatus. The safety layer determines a separate position solution for GNSS, a separate position solution based on inertial and wheel odometry measurements, and separate position solutions using either camera, LiDAR or radar measurements. The individual position solutions are compared and checked for outliers. Inconsistent sensor data are removed. The individual sensor solutions could be obtained with a single epoch least-squares estimation, a Kalman filter, machine learning or deep learning. A safety layer is also needed for the object or environment detection, i.e. the objects are determined separately with camera, LiDAR and radar data. The obtained object lists are compared and eventual outliers are removed.

A further advantageous embodiment is described in the nineth claim: The apparatus includes an integrated display with an optional touch screen for configuration of the hardware interfaces or providing status information to the user. The integrated display improves the user-friendliness of the apparatus, i.e. the user can configure the hardware interfaces and receive status information of the apparatus without the need of further hardware.

A further advantageous embodiment is described in the tenth claim: The apparatus includes external interfaces. These external interfaces could be Universal Serial Bus (USB), Ethernet, CAN, WiFi or mobile radio. The USB and Ethernet interfaces allow the connection of additional sensors that could be also integrated into the sensor fusion. The external interfaces could also be used to receive GNSS correction data or a map, or to transmit the position, object or map data to any other device.

A further advantageous embodiment is described in the eleventh claim: The apparatus includes an internal battery for autonomous operation. The battery powers the processing board and the sensors.

A further advantageous embodiment is described in the twelfth claim: The apparatus has a casing made of light-weight material. The light-weight material enables an easy take-down of the apparatus from the target platform without the need of a lift or any sophisticated tool.

A further advantageous embodiment is described in the thirteenth claim: The apparatus is mounted with suction cups or with screws on the target platform. The mounting types enable a fast and solid installation, and allow at the same time a fast removal of the apparatus from the target platform.

A further advantageous embodiment is described in the fourteenth claim: The apparatus relates all sensor data to a common, preferably GNSS based, timing basis. The apparatus also allows any other device to synchronize to this timing basis, preferably via an NTP protocol.

A further advantageous embodiment is described in the fifteenth claim: The apparatus is mounted on a vehicle or a robot to determine the position, velocity, attitude or angular rate of the vehicle or robot, or to determine a camera-, LiDAR- or radar-based map, or to determine a list of objects with their positions. The position, velocity, attitude or angular rate of the vehicle or robot are determined with a sensor fusion with a Kalman filter as described in the fifth claim. The object detection using camera, LiDAR or radar data is described in the sixth claim and the map determination is described already in the seventh claim.

In the drawings:
- **Fig. 1**: schematically illustrates an apparatus for precise positioning, mapping or object determination with the integrated sensors and processors
- **Fig. 2**: schematically shows a flow diagram for determining a position, a map, or an object detection with the apparatus

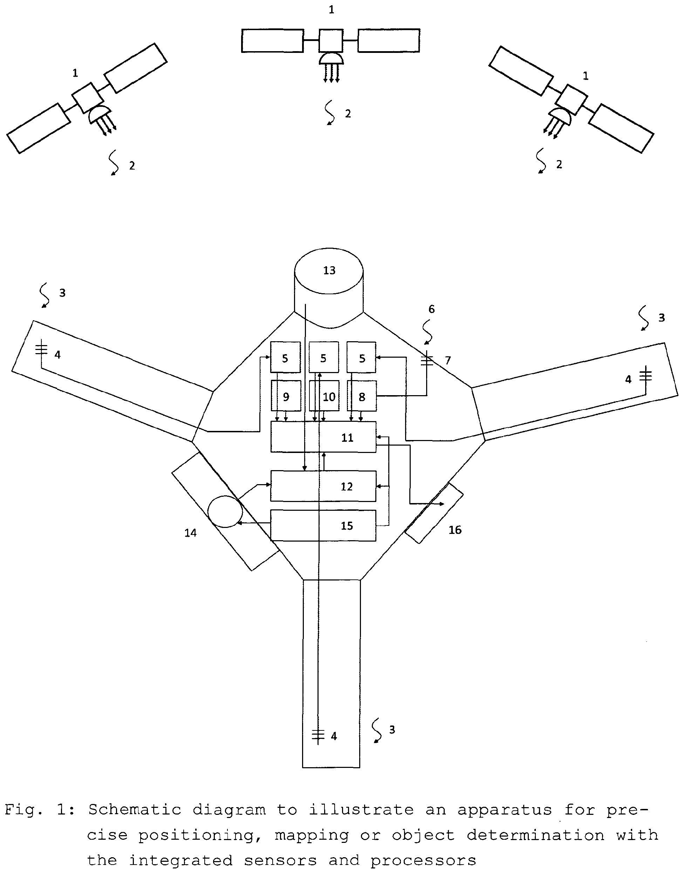

Fig. 1 shows an apparatus for precise positioning, mapping or object determination with the integrated sensors and processors. The satellites (1) of a Global Navigation Satellite System (GNSS) transmit navigation signals (2). These navigation signals are received by GNSS antennas (4) and the received GNSS signals (3) are further processed by the GNSS receivers (5), whereas both the GNSS antennas (4) and the GNSS receivers (5) are integrated within the apparatus. The GNSS correction data (6) are received by an integrated mobile radio antenna (7) being connected to an integrated mobile radio module (8). The apparatus also has an integrated inertial sensor (9) and a wheel odometry CAN interface (10) for receiving wheel odometry measurements. The GNSS, inertial and wheel speed measurements are fused by the processor (11), which uses a Kalman filter to determine the position, velocity, acceleration, attitude and angular rates of the platform. The data of the camera (14) and LiDAR or radar (13) are much larger than the GNSS, INS and wheel odometry measurements and, therefore, are pre-processed on a separate processor (13). This separate processor (13) performs a camera-based, LiDAR-based or radar-based simultaneous localization and mapping or visual odometry to obtain position, velocity, attitude or angular rate information. The apparatus also includes an internal power supply (15) for autonomous operations and an integrated display (16) with optional touch screen for configuration of the hardware interfaces or for providing status information to the user.

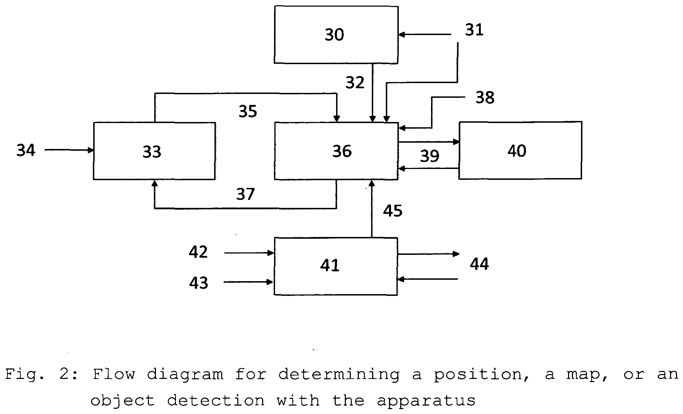

Fig. 2 shows a flow diagram for determining a position, a map, or an object detection with the apparatus. The position determination is performed with a Kalman filter, which includes a state prediction step (33) and a state update step (36). The Kalman filter is initialized by a least-squares estimation (30). The initialization uses of the GNSS measurements (31) of the first GNSS measurement epoch. The estimated state parameters (32) at the initial epoch include the position, velocity, attitude (e.g. as quaternion or Euler angles) of the apparatus. The state prediction (33) is performed with inertial measurements (34), i.e. with acceleration and angular rate measurements. The predicted state parameters (35) include the position, velocity, acceleration, attitude, angular rates, GNSS carrier phase ambiguities and inertial sensor biases. The predicted state parameters (35) are updated by the Kalman filter (36) using either GNSS measurements (31) or wheel odometry measurements (38). The updated state parameters (37) are then fed back to the state prediction step (33) in the next epoch. The carrier phase ambiguities are by definition integer-valued. Therefore, the float ambiguity estimates (39) are mapped to integer numbers in (40) once the float ambiguities are sufficiently converged. The covariance of the fixed ambiguities is set to zero after the ambiguity fixing. The processing element (41) includes either a Simultaneous Localization and Mapping, a Visual Odometry, or an Object detection. The input of (41) is any case either camera data (42) or LiDAR or radar data (43) or both data. In the first two cases, (41) provides a position, velocity, attitude or angular rate information (45) that can be used by the Kalman filter to update the state parameters in an update step (36). The SLAM also provides or uses a map (44). In the third case, (41) provides a list of objects (44).

### References:

[1] A. J. Hawkins: "Waymo's next-generation self-driving system can 'see' a stop sign 500 meters aways", link: https://www.theverge.com/2020/3/4/21165014/waymo-fifth-generation-self-driving-radar-camera-lidar-jaguar-ipace, published: 04.03.2020, accessed on: 06.08.2020.
[2] S. Abuelsamid: "Ford Launches Bugs at Sensors Because Keeping Them Clean Is Crucial For Self-Driving Cars", link: https://www.forbes.com/sites/samabuelsamid/2019/09/04/ford -launches-bugs-at-sensors-keeping-it-clean-will-be-crucial-for-automated-vehicles/#61cb9ff55002, published: 4.09.2019, accessed on: 06.08.2020.
[3] A. Fernandez, M. Wis, G. Vecchione, P.F. Silva, I. Colomina, E. Angelats and M.E. Pares: "Real-time navigation and mapping with Mobile Mapping Systems using LiDAR/ Camera/ INS/ GNSS advanced hybridization algorithms: description and test results", Proc. of 27th International Technical Meeting of the Satellite Division of The Institute of Navigation (ION GNSS+ 2014), Tampa, Florida, USA, pp. 896 - 904, Sep. 2014.

### Reference numbers:

- 1: satellite of Global Navigation Satellite System (GNSS)
- 2: transmitted navigation signal
- 3: received navigation signal
- 4: antenna of GNSS receiver
- 5: GNSS receiver
- 6: correction data for GNSS
- 7: antenna for mobile radio
- 8: mobile radio module
- 9: inertial sensor
- 10: wheel odometry CAN interface
- 11: processor for fusion of the GNSS, inertial sensor and wheel speed measurements, and optionally also of the position, velocity, attitude or angular rate information obtained from the camera-based, LiDAR-based or radar-based simultaneous localization and mapping or visual odometry
- 12: processor for performing a camera-based, LiDAR-based or radar-based simultaneous localization and mapping or visual odometry, that provide position, velocity, attitude or angular rate information
- 13: LiDAR sensor
- 14: camera sensor
- 15: internal power for power supply
- 16: integrated display with optional touch screen for configuration of the hardware interfaces or for providing status information to the user

## Claims

1. An apparatus with a set of integrated positioning sensors and an integrated processor for performing the sensor fusion,
**characterized in that**
- the set of integrated positioning sensors includes at least two, more preferable three, receivers (5) and antennas (4) for the reception of global navigation satellite system signals (3), an inertial sensor (9), an interface for receiving wheel speed measurements (10), a camera (14) and a LiDAR or radar (13),
- the integrated processor (11) combines the sensor data for determining the position, velocity or orientation of the apparatus, for determining a map, or for determining the environment of the apparatus.

2. The apparatus according to claim 1,
wherein the antennas (4) for the reception of the global navigation satellite system signals are separated by at least 10 cm, more preferably by at least 20 cm, of each other and wherein the LiDAR (13) is placed at the top position within the apparatus.

3. The apparatus according to claim 1,
wherein the apparatus includes a mobile radio module (8)
- for the reception of Global Navigation Satellite System correction data (6), or
- for the reception of a map or,
- for the transmission of the sensor data, or
- for the transmission of the determined position or environment.

4. The apparatus according to claim 1,
wherein the apparatus includes a processor (12) for performing a camera-based, LiDAR-based or radar-based simultaneous localization and mapping or visual odometry, that provide position, velocity, attitude or angular rate information.

5. The apparatus according to claim 1,
wherein the apparatus includes a processor (11) for fusion of the measurements of the Global Navigation Satellite Systems (3), of the inertial sensor (9), of the wheel speed measurements (10), and optionally also of the position, velocity, attitude or angular rate information obtained from the camera-based, LiDAR-based or radar-based simultaneous localization and mapping or visual odometry.

6. The apparatus according to claim 1,
whereas the object or environment detection uses a conventional feature-based approach or a machine learning based approach or a deep learning based approach.

7. The apparatus according to claim 1,
wherein the apparatus provides
- raw sensor data, or
- determined position, velocity, acceleration, attitude or angular rate information, or
- a list of objects with their positions, or
- a map based on camera-, LiDAR or radar data.

8. The apparatus according to claim 1,
whereas the apparatus includes a functional safety layer for monitoring the functional safety of the apparatus or of the platform that carries the apparatus.

9. The apparatus according to claim 1,
wherein the apparatus includes an integrated display (16) with an optional touch screen for configuration of the hardware interfaces or providing status information to the user.

10. The apparatus according to claim 1,
wherein the apparatus includes external interfaces, whereas the external interfaces are USB, Ethernet, WiFi or mobile radio (8).

11. The apparatus according to claim 1,
wherein the apparatus includes an internal battery (15) for autonomous operation.

12. The apparatus according to claim 1,
wherein the casing of the apparatus is made of a light-weight material.

13. The apparatus according to claim 1,
whereas the apparatus can be mounted either with suction cups or with screws.

14. The apparatus according to claim 1,
wherein the apparatus relates all sensor data to a common, preferably Global Navigation Satellite System based, timing basis, and wherein the apparatus allows another device to synchronize to this timing basis, preferably via an NTP protocol.

15. The apparatus according to any one of claims 1 to 14, whereas the apparatus is mounted on a vehicle or a robot
- to determine the position, velocity, attitude or angular rate of the vehicle or robot, or
- to determine a camera-, LiDAR- or radar-based map, or
- to determine a list of objects with their positions.
